# EUROPEAN PATENT SPECIFICATION

(11) **EP 0 756 690 B1**
(45) Date of publication and mention of the grant of the patent: **13.02.2002**
(21) Application number: 95903350.7
(22) Date of filing: 07.12.1994
(51) Int. Cl.: F24J 2/08

(54) **A SOLAR LENS AND SUPPORTER AND DEVICE FOR PRODUCTION FOR HYDROGEN AND ELECTRICITY**
SONNENLINSE, IHRE HALTERUNG UND VORRICHTUNG ZUR ERZEUGUNG VON WASSERSTOFF UND STROM
LENTILLE SOLAIRE, SON SUPPORT ET DISPOSITIF DE PRODUCTION D'HYDROGENE ET D'ELECTRICITE

(30) Priority: 07.12.1993 FI 935478
(43) Date of publication of application: 05.02.1997
(73) Proprietor: Reiala, Mauno Sakari, 05880 Hyvinkää (FI)
(72) Inventor: Reiala, Mauno Sakari, 05880 Hyvinkää (FI)
(86) International application number: FI9400554
(87) International publication number: WO9516170

(56) References cited:
- WO-A-94/27096
- CH-A- 626 159
- DE-A- 2 412 908
- DE-A- 3 638 317
- PATENT ABSTRACTS OF JAPAN, Vol. 6, No. 153, M-149; & JP,A,57 070 358 (OCHIAI JUNICHI), 30 April 1982.
- PATENT ABSTRACTS OF JAPAN, Vol. 11, No. 143, E-504; & JP,A,61 281 448 (SUEYOSHI MASAKI), 11 December 1986.

## Description

The present invention relates to a solar lens obtained by improving the gas balloon thin lens presented in utility design FI 453 and FI 603 and to an apparatus for the production of hydrogen and electricity.

The gas balloon thin lens presented in utility design FI 453 should be such as to retain its optical shape even when in an oblique position; furthermore, the relatively thin lens should be provided with a support and the gas balloon should raise the lens onto its support immediately upon sunrise, and the lens should be provided with means for direction adjustment and the lens should preferably be combined with an apparatus as defined in utility design FI 603 which produces electricity and which also produces hydrogen.

In the gas balloon thin lens of utility design 453, a liquid lens is formed between membranes by bloating and the lens is supported by a gas balloon, and a pressurized gas space on the surface of the lens keeps the liquid lens in its correct shape. For instance in solar power plants, when the liquid lens is directed towards the sun, it becomes thicker in its lower part and the optical shape of the liquid lens is lost.

The electricity producing apparatus presented in utility design FI 603 is provided with a water splitter operating by means of a solar radiation focuser and producing hydrogen and oxygen and with hydrogen and oxygen pipes leading from the water splitter to the electrodes of an electricity producing fuel cell and with a water pipe leading from the fuel cell to the water splitter to permit the water to be again split into gases.

From the abovementioned lens - gas balloon aggregate, it should be possible to put together a high-capacity solar power station which needs no expensive supporting structures or expensive machinery and which converts some 90 % of the incident solar energy into electricity production.

The water splitter works well when the optical shape of the lens is retained and when the lens is focused on the right spot in the apparatus and when heat dissipation from the apparatus is relatively low. The aggregate consisting of an apparatus producing electricity from hydrogen.

Previously known are solar cells of silicone which produce electricity directly from solar radiation, but they are so expensive in construction and have such a low efficiency in electricity production, about 12%, that building large solar power stations using solar cells has been and remains unprofitable.

Previously known are also solar power stations using hundreds of mirrors to reflect solar rays to a tower about 100 m high. In the tower, the concentrated solar energy heats a nitrate salt solution to about 750°C. The hot salt solution is pumped into a vaporizing apparatus and the steam thus produced is used to drive a steam turbine and a generator producing electricity. The heat stored in the salt can be used during peak consumption.

The drawbacks of a solar power station like this include the following:

The tower and mirrors form a relatively heavy and expensive structure, and a relatively large production unit is needed for operation.

Because of the divergence of solar rays, reflecting them with planar mirrors cannot produce temperatures as high as those attained by using thin solar lenses.

A known water splitter operated by solar heat splits water into hydrogen and oxygen gases at a temperature as low as 750°C using a heavy metal catalyser. However, a more efficient formation of hydrogen and oxygen will be achieved without expensive catalysers if the operating temperature at the focus remains permanently at a sufficiently high level, e.g. over 2000°C.

A method for thermodynamic splitting of water at a high temperature is described e.g. in the book "Hydrogen as an Energy Carrier" by Winter p. 168 - 169. The thermal energy required for the splitting reaction can advantageously be obtained from solar radiation by using a thin solar lens of a diameter of *e*.*g*. 15 m if a constant optical shape of the lens can be retained even when the lens is tilted.

The periodical "Tieteen Kuvalehti" 8/92 describes an apparatus for generating electricity by means of fuel cells in which hydrogen and oxygen gases are combined at electrodes back into water molecules, producing an electric current. The operating temperature of the fuel cell is about 1000°C. The ceramic fuel cells can withstand temperatures exceeding 2000°C.

The splitting of water into hydrogen and oxygen gases requires heat and the recombination of hydrogen and oxygen can be effected quickly and advantageously at a high temperature without catalysts, provided that the temperature is sufficiently high. When the reactions take place in succession and in the same apparatus, energy losses can be brought to a relatively low level and the consumption of water is also reduced. Generating electricity from hydrogen produces no pollution and no dangerous radiation. Hydrogen can be advantageously stored in liquefied form.

The required high temperature achieved by means of e.g. a large thin lens allows a water splitter and an electricity generator to be combined into an apparatus in which the splitting of water into hydrogen and the conversion of hydrogen into electric current take place advantageously in a successive and continuous reaction.

Previously known are clear liquid resins such as e.g. polyester and epoxy resin which are hardened by the action of a hardener. Also known are clear acrylic and silicone plastics which are hardened by themselves by the action of the oxygen present in the air. There are also known liquids which are hardened when cooled or heated.

E.g. the plastics referred to can be cast into a lens mould and they can be bloated in liquid form e.g. on a taut membrane or between membranes into the shape of a thin lens.

E.g. application WO-A-90/10182 presents a parabolic mirror reflecting solar radiation.

Application DE-A-3920186 presents a spherical mirror reflecting solar radiation, supported by wire cables.

Patent specification FI 63117 presents a solar cell provided with liquid lenses for heat accumulation.

Application WO-A-90/5881 presents a solar panel with cylindrical lenses.

The previously known glass and plastic lenses and parabolic reflectors can produce relatively high temperatures, but they are relatively thick and heavy and they need massive and expensive supporting structures. And the temperature achieved is not sufficient for quick splitting of water e.g. by the high-temperature splitting method.

The grinding of an 8-m glass lens takes up about one year and the lens weighs ca. 20 t. A large, thin solar lens having a diameter of e.g. 15 m and being supported by a gas balloon can be produced in a few hours when manufactured individually and in a few minutes in serial production.

The energy can be profitably transmitted in the form of electricity when the distance is under 1000 km, but for larger distances a hydrogen gas pipe is considered more advantageous.

In the Nordic countries for example, hydrogen produced by solar energy can be stored relatively advantageously in liquid form for winter. Solar-energy based hydrogen can be profitably distributed to the users via the existing network of natural gas pipes. The water splitter and electricity generator placed in the focus are relatively small and inexpensive, allowing a fairly large solar power station to be assembled from them at a low cost. In addition to large solar power stations in equatorial countries, they can be advantageously used e.g. in the Nordic countries e.g. in small electric district heating power plants and in solar power stations owned by industrial enterprises to produce electricity.

The construction of solar power stations has been hampered by the absence of large but light and rigid thin lenses that retain their shape and function without heavy supporting structures.

Using solar lenses, it is possible to assemble a solar power station of an area of 1 km² which, by means of a water splitter known in itself, produces hydrogen gas at a rate corresponding to 500 MW. Solar lenses must also be capable of producing electricity and steam directly.

The object of the present invention is to achieve an improved lens for a solar power station, a lens which, though it is relatively thin and light, still retains its optical shape well even when in an oblique position. Moreover, the lifting up and alignment of the lens and its suspension in the air are implemented in an advantageous manner.

A further object of the invention is to achieve a combined lens-water splitter - electricity generator of cheap construction and with a good efficiency.

These objects are achieved on the basis of the features of the invention as defined in the claims.

In the following, the invention is described in detail by referring to the attached sectional drawings, which present in reduced size:

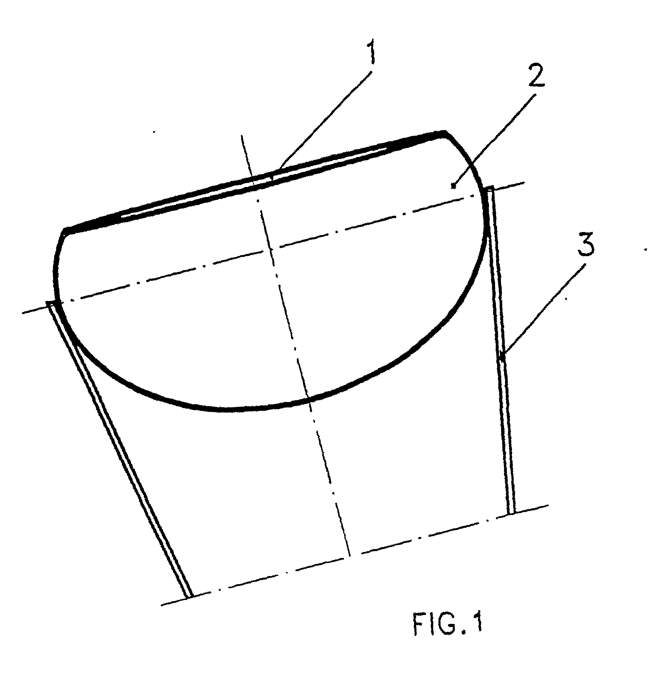

FIG. 1 a lens on a scale of about 1 : 200.

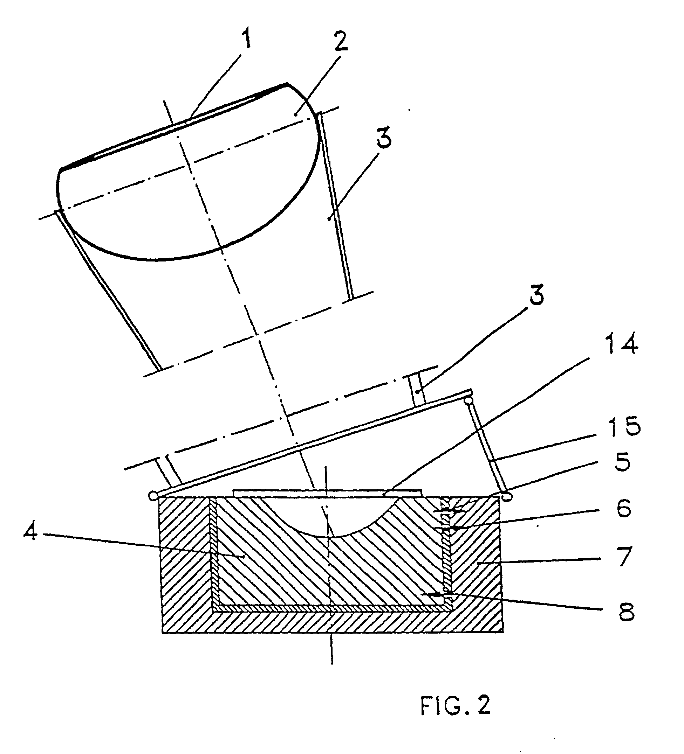

On a scale of 1 : 20 and provided with a combined lens apparatus: FIG. 2 a water splitter - hydrogen and electricity generator, FIG. 3 a vaporizer and FIG. 4 a vaporizer liquid pump.

A solar lens, a supporter and a combined apparatus for the production of hydrogen and electricity provided with a liquid thin lens (1) supported and retained by a gas balloon (2) as well as, in the focus of the lens, a water splitter (4) reducing water into hydrogen and oxygen and an electricity generator (7) producing electricity from hydrogen and oxygen and provided with hydrogen and oxygen outlets (5 and 6) leading from the water splitter (4) to the electrodes of the electricity generator (7) known in themselves; and the lens (1) supported by a gas balloon (2) is not in liquid form but has been converted into solid form, thus by hardening liquid polyester or epoxy resin and hot air or hydrogen from the focus of said solar lens is passed into the gas balloon. The electricity generator (7) may be formed around the water splitter (4) placed in the focus of the lens (1).

An outlet (8) may be leading from the electricity generator (7) to the water splitter (4) for water to be split again.

To retain the lens (1) at right angles between the Sun and the focus, the lens (1) may be supported by means of pipes (3) onto the apparatus producing hydrogen and electricity (4 and 7) placed in the focus.

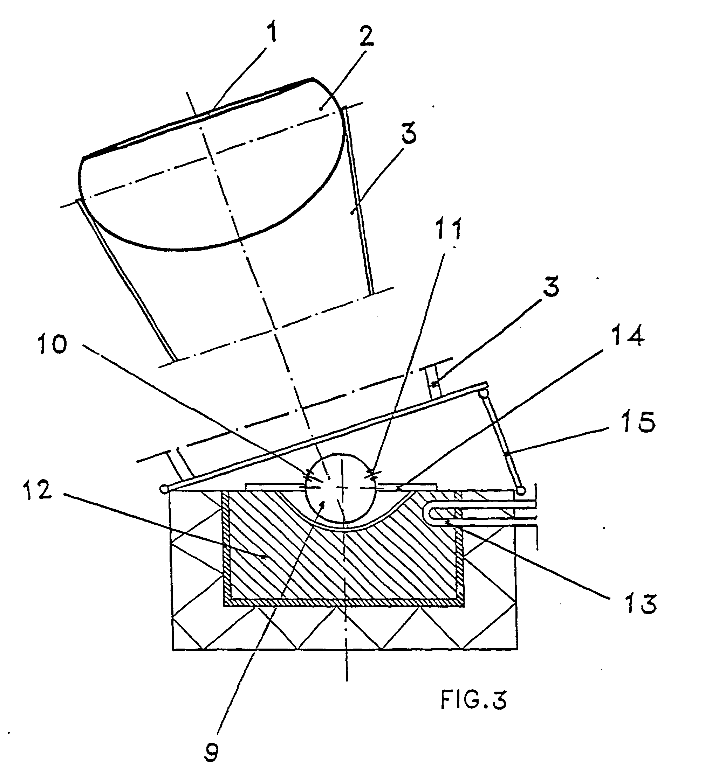

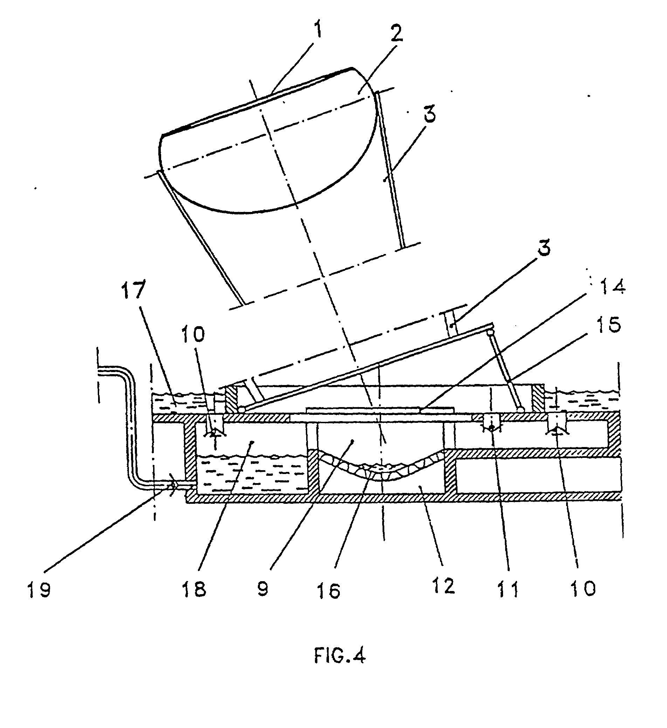

The solar lens (1) may be combined directly with a steam generator (9), FIG. 3, or with a liquid pump, FIG. 4, e.g. for irrigation in equatorial countries.

## Claims

1. Combined solar lens, supporter and device for hydrogen and electricity production with a thin lens (1) supported and retained by a gas balloon (2) as well as, in the focus of the lens (1), a water splitter (4) reducing water into hydrogen and oxygen and a generator (7) producing electricity from hydrogen and oxygen and provided with hydrogen and oxygen outlets (5 and 6) leading from the water splitter (4) to the electrodes of the electricity generator (7) known in themselves,
**characterized in that** the lens (1) supported by the gas balloon (2) is made from cured polyester or epoxy resin and that hot air or hydrogen from the focus of said solar lens is passed into the gas balloon.

2. Combined solar lens (1)-gas balloon (2)-water splitter (4)-electricity generator (7) defined in claim 1,
**characterized in that** the electricity generator (7) is formed around the water splitter (4) placed in the focus of the lens (1).

## Patentansprüche

1. Kombinierte Solarlinse, Träger und Anlage für Wasserstoff- und Stromerzeugung mit dünner Linse (1), die durch eine Gasballon (2) gestützt und getragen ist, sowie im Fokus der Linse (1) ein Wasserabspalter (4), der Wasser ins Wasserstoff und Sauerstoff zerlegt, sowie ein Generator (7), das aus Wasserstoff und Sauerstoff Elektrizität produziert und mit Ausströmungsöffnungen für Wasserstoff und Sauerstoff (5 und 6) versehen ist, die sich zwischen dem Wasserabspalter (4) und den an sich bekannten Elektroden des Stromgenerators (7) befinden,
**dadurch gekennzeichnet, dass** die durch die Gasballon (2) getragene Linse (1) aus gehärtetem Polyester oder Epoxyharz hergestellt ist und dass heisse Luft oder Wasserstoff aus dem Fokus der genannten Solarlinse in die Gasballon geführt wird.

2. Zusammengesetzte Solarlinse (1) - Gasballon (2) - Wasserabspalter (4)-Stromgenerator (7) nach Anspruch 1,
**dadurch gekennzeichnet,** dassderStromgenerator(7)umden Wasserabspalter (4) herum aufgebaut ist, der sich im Fokus der Linse (1) befindet.

## Revendications

1. Lentille solaire combinée, son support, et son dispositif pour production d'hydrogène et d'électricité, composée, d'une mince lentille ( 1 ) supportée et maintenue par un ballon à gaz ( 2) ainsi que dans le foyer de la lentille ( 1 ) d' un dissociateur d'eau ( 4 ) dissociant l'eau en hydrogène et oxygène, d'un générateur d'électricité ( 7) à partir d'hydrogène et d'oxygène muni d'orifices pour oxygène et hydrogène ( 5 et 6 ) allant du dissociateur d'eau ( 4) aux électrodes du générateur d'électricité ( 7 ) déjà connu en tant que tel, **caractérisé par le fait que** la lentille ( 1 ) supportée par le ballon à gaz ( 2 ) est faite de résine polyester ou de résine époxidique durcies et que l'air chaud ou l'hydrogène du foyer de la dite lentille solaire sont conduits au ballon à gaz.

2. La lentille solaire combinée ( 1 ) du ballon à gaz ( 2 ) du dissociateur d'eau ( 4 ) du générateur d'électricité ( 7 ) définis dans la revendication 1, **caractérisée par le fait que** le générateur d'électricité ( 7 ) est situé autour du dissociateur d'eau ( 4 ) placé dans le foyer de la lentille ( 1 ).
